# EUROPEAN PATENT APPLICATION

(11) **EP 4 656 510 A1**
(43) Date of publication of application: **03.12.2025**
(21) Application number: 24179305.8
(22) Date of filing: 31.05.2024
(51) Int. Cl.: B63H 21/20, B63H 23/12

(54) **PROPULSION ARRANGEMENT FOR MARINE VESSEL WITH CROSS-OVER FUNCTIONALITY**

(71) Applicant: Volvo Penta Corporation, 405 08 Göteborg (SE)
(72) Inventor: Bushehri, Michael, 422 47 Hisings Backa (SE)
(74) Representative: Valea AB

(57) **Abstract**

A propulsion arrangement (200) for a marine vessel and a method for controlling the operation of the propulsion arrangement (200) are provided. The propulsion arrangement (200) comprises a first and a second hybrid drivelines (210, 220) comprising a first and second electric machines (EM1, EM2), a first and a second combustion engines (CE1, CE2), a first and a second hybrid power control units (HPCU1, HPCU2). The first and a second hybrid drivelines (210, 220) are connected at the side of the first and second electric machines (EM1, EM2) via a third and a fourth breakers (BR3, BR4) and a third and a fourth electric motor drives (EMD3, EMD4). The first and second hybrid power control units (HPCU1, HPCU2) are configured to receive a command from a central control system (CU) of the marine vessel and generate control signals to configure an operation mode of the propulsion arrangement (200).

## Description

### TECHNICAL FIELD

The disclosure relates generally to marine vessels. In particular aspects, the disclosure relates to a propulsion arrangement for a marine vessel with cross-over functionality between two hybrid drivelines. Although the disclosure may be described with respect to a particular marine vessel, the disclosure is not restricted to any particular marine vessel.

### BACKGROUND

Marine vessels with two hybrid drivelines are an advanced form of maritime technology designed to enhance efficiency, reduce environmental impact, and offer greater operational flexibility. These vessels integrate two separate hybrid propulsion systems, typically combining traditional internal combustion engines with electric motors. Each hybrid driveline typically consists of a combination of a diesel engine, an electric motor, and batteries. The vessel is equipped with two independent propulsion systems, allowing for redundancy and flexibility in operation. Internal combustion engines (ICE) usually use diesel engines, providing high power output for demanding operations. Electric motors are usually powered by batteries, offering quieter and more efficient operation at lower speeds. Lithium-ion batteries are commonly used as energy storage for their high energy density and quick recharge capabilities. Power management systems are used to manage the distribution of power between diesel engines, electric motors, and batteries to optimize efficiency and performance.

To save fuel and engine hours, there is a need to run one engine at a time and the other engine goes to standby, i.e. the other engine does not operate to generate power. To send the power from one propulsion side to the other propulsion side, i.e. to have a cross-over functionality, a connection between the two drivelines is needed.

### SUMMARY

According to a first aspect of the disclosure, a propulsion arrangement for a marine vessel is provided. The propulsion arrangement comprises a first hybrid driveline, i.e. a Port driveline, and a second hybrid driveline, i.e. a Starboard driveline. Each hybrid driveline comprises an electric machine and a combustion engine comprising an engine management system. The combustion engine is coupled to the electric machine. Each hybrid driveline further comprises a hybrid power control unit. In the first hybrid driveline, a first electric machine is connected to a battery pack via a first breaker and a first electric motor drive. In the second hybrid driveline, a second electric machine is connected to the battery pack via a second breaker and a second electric motor drive. The propulsion arrangement further comprises a third and fourth breakers and a third and fourth electric motor drives. The first electric machine is connected to the third electric motor drive via the third breaker, the second electric machine is connected to the fourth electric motor drive via the fourth breaker, and the third and fourth electric motor drives are connected to each other such that the first and second hybrid drivelines are connected to each other at the electric machines side via the third and fourth breakers and the third and fourth electric motor drives. The first and second hybrid power control unit are configured to receive a command from a central control system of the marine vessel and generate control signals to configure an operation mode of the propulsion arrangement. The first aspect of the disclosure may seek to provide a solution for the cross-over functionality between the two drive lines. By adding two breakers and two electric motor drives, a connection between the two hybrid drive lines can be provided at the Alternating Current (AC) side of the drive lines. A technical benefit may include providing a simple propulsion arrangement for marine vessels with lower cost, smaller size, and higher efficiency compared to the market bus tie solution.

Optionally in some examples, including in at least one preferred example, the operation mode of the propulsion arrangement may be configured by setting the first, second third and fourth breakers in closed or open position, and controlling the operations of the third and fourth electric motor drives. A technical benefit may include providing a propulsion arrangement with configurable operation mode. The propulsion arrangement may operate in a normal mode i.e. the first and second hybrid drivelines are not connected to each other and operated separately, or in a cross-function mode i.e. the first and second hybrid drivelines are connected to each other and the power can be delivered from one side to other side.

Optionally in some examples, including in at least one preferred example, the first and second hybrid power control unit may be configured to set the third and fourth breakers in closed position, and set the first and second breakers to open position such that the first and second hybrid drivelines are connected to each other enabling power flow between the first and second hybrid drivelines. A technical benefit may include saving fuel and engine hours by connecting two drivelines and enabling power flow between the first and second hybrid drivelines.

Optionally in some examples, including in at least one preferred example, the propulsion arrangement may be configured to run the first combustion engine and keep the second combustion engine in standby. Then the third electric motor drive may be set to generate **negative** torque by e.g. the first hybrid power control unit and the fourth electric motor drive is set to generate **positive** torque for the second electric machine by e.g. the second hybrid power control unit. A technical benefit may include providing cross-over functionality between the two drivelines and the possibility of running one engine while the other engine goes to standby to save fuel and engine hours.

Optionally in some examples, including in at least one preferred example, the propulsion arrangement may be configured to run the second combustion engine and keep the first combustion engine in standby. Then the third electric motor drive is set to generate **positive** torque for the first electric machine by e.g. the first hybrid power control unit and the fourth electric motor drive is set to generate **negative** torque by e.g. the second hybrid power control unit. A technical benefit may include providing cross-over functionality between the two drivelines and the possibility of running one engine while the other engine goes on standby to save fuel and engine hours.

According to a second aspect of the disclosure, a computer-implemented method for controlling operation of the propulsion arrangement in a marine vessel described above is provided. The method comprises receiving a command from a central control system of the marine vessel and generating control signals to control the operation mode of the propulsion arrangement based on the command. The second aspect of the disclosure may seek a method to control the operation mode of the propulsion arrangement between e.g. a normal mode and a cross-function mode. A technical benefit may include providing the possibility of configuring the operation mode of the propulsion arrangement to save fuel and engine hours.

Optionally in some examples, including in at least one preferred example, the command may be a cross-over function operation mode. Generating control signals may comprise generating control signals to set the first breaker in open position and set the third breaker in closed position; generating control signals to set the second breaker to open position and set the fourth breaker in closed position; and generating control signals to control the operations of the third and fourth electric motor drives such that power flow may occur between the first and second hybrid drivelines. A technical benefit may include providing cross-over functionality between the two drivelines and enabling power flow to occur between the first and second hybrid drivelines.

Optionally in some examples, including in at least one preferred example, generating control signals to control the operations of the third and fourth electric motor drives may comprise running the first combustion engine and keeping the second combustion engine in standby; controlling the third electric motor drive to generate **negative** torque; and controlling the fourth electric motor drive to generate **positive** torque for the second electric machine. A technical benefit may include providing the possibility of operating an engine at a time and enabling power flow to occur between the first and second hybrid drivelines to save fuel and engine hours.

Optionally in some examples, including in at least one preferred example, generating control signals to control the operations of the third and fourth electric motor drives may comprise running the second combustion engine and keeping the first combustion engine in standby; controlling the third electric motor drive to generate **positive** torque for the first electric machine; controlling the fourth electric motor drive to generate **negative** torque. A technical benefit may include providing the possibility of operating one engine at a time and enabling power flow to occur between the first and second hybrid drivelines to save fuel and engine hours.

According to a third aspect of the disclosure, a marine vessel comprising a propulsion arrangement described above is provided. A technical benefit may include providing a marine vessel with configurable operation mode and cross-over functionality to improve power efficiency, save fuel and engine hours.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary propulsion system with two hybrid drivelines with a bus tie connection according to prior art.
**FIG. 2** is an exemplary propulsion system with two hybrid drivelines and a connection between the two hybrid drivelines according to an example.
**FIG. 3** is simplified schematic block diagram showing a marine vessel comprising a propulsion arrangement according to an example.
**FIG. 4** is a flow chart illustrating a method for controlling the operation of the propulsion arrangement shown in Fig. 2 according to an example.
**FIG. 5** is an exemplary schematic block diagram showing a hybrid power control unit according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

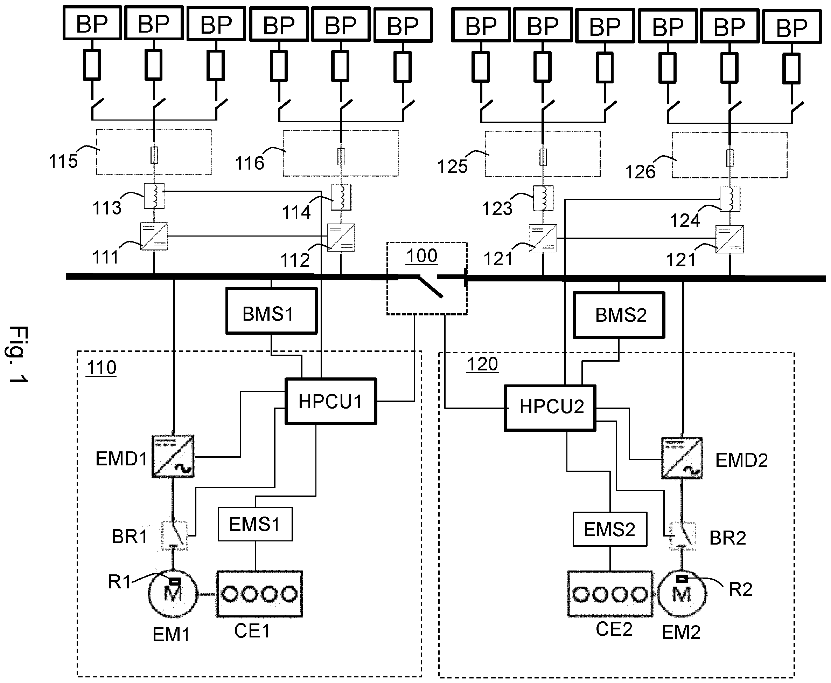

To save fuel and engine hours for a marine vessel with hybrid propulsion system having two drivelines, there is a need to run one engine at a time while the other engine goes to standby. To send the power from one propulsion side to the other propulsion side, i.e. to have cross-over functionality between the two drivelines, a connection between the two drivelines is needed. To achieve this, a market solution is to use bus tie technology. Bus tie technology is to use bus-tie breakers or switches to interconnect different sections of an electrical bus system. This technology enables the distribution of electrical power between separate bus sections, providing a means to balance load, manage redundancy, and improve the overall resilience of a power system. **Fig. 1** is a simplified schematic block diagram showing a propulsion system with two hybrid drivelines, where a bus-tie breaker **100** is used to connect the two hybrid drivelines **110, 120.** Each of the hybrid drivelines 110, 120 comprises an electric machine **EM1, EM2,** a combustion engine **CE1, CE2** comprising an engine management system **EMS1, EMS2,** and a hybrid power control unit **HPCU1, HPCU2.** As can be seen from the figure, for cross-over functionality, two DC-DC converters **111, 112, 121, 122,** two chokes **113, 114, 123, 124,** and two Junction boxes **115, 116, 125, 126** may be needed on each side. Signal cables are also needed on each side for connecting the two hybrid power control units HPCU1, HPCU2 to the DC-DC converters 111, 112, 121, 122, the chokes 113, 114, 123, 124, and the bus-tie breaker 100 for sending control signals. The added components, e.g. the two DC-DC converters 111, 112, 121, 122, two chokes 113, 114, 123, 124, and two Junction boxes 115, 116, 125, 126 and the signal cables for connecting the two hybrid power control units HPCU1, HPCU2 to these added components will add losses into the system, increase the cost, size and weight of the propulsion system. Further, the voltage level of the battery pack **BP** may have to be changed e.g. from 750V to 540 - 650 V, and the charging strategy may also need to be changed, which leads to a complicated and expensive system.

To have a simple and efficient propulsion system with cross-over functionality between the two drivelines, it is proposed to have a connection between the two drivelines at the AC side of the drivelines by adding two electric motor drives (EMDs) and two breakers (BRs) at the electric machine side in the hybrid propulsion system.

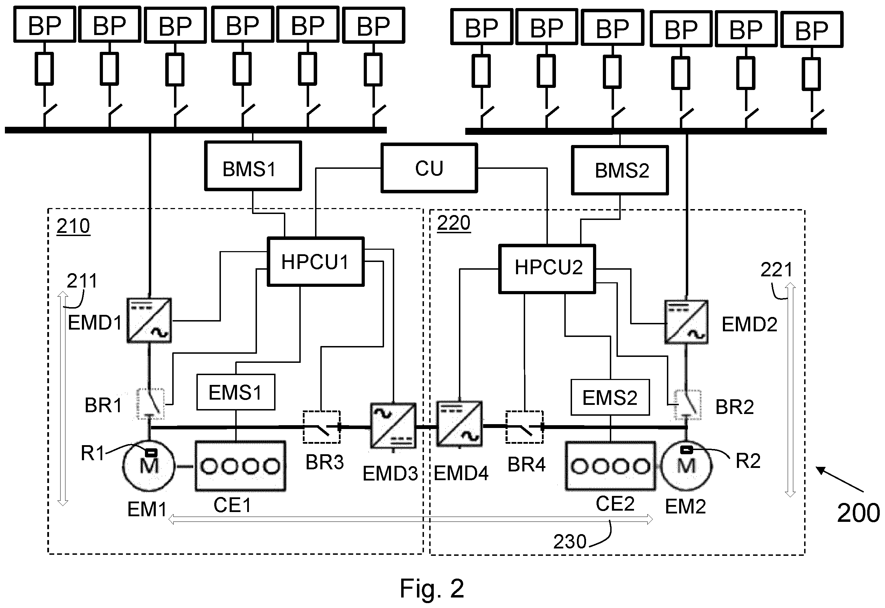

**Fig. 2** shows an exemplary propulsion arrangement **200** for a marine vessel with two hybrid drivelines and with a connection between the two hybrid drivelines according to an example. The propulsion arrangement 200 comprises a first hybrid driveline **210,** i.e. the Port driveline, and a second hybrid driveline **220,** i.e. the Starboard driveline. The first hybrid driveline 210 comprises a first electric machine or motor **EM1** comprising a first resolver **R1.** A resolver is a type of sensor used for position sensing, measuring rotational speed in e.g. revolutions per minute (rpm) etc. of the first electric machine EM1 and sends the position and rpm signals to an EMD. EMD is an electronic device used to control the speed, torque, and direction of an electric motor. It converts electrical energy from a power source, such as a utility grid or a battery, into the appropriate voltage, frequency, and waveform required to drive the motor at the desired speed and torque. The first hybrid driveline 210 further comprises a first electric motor drive **EMD1** and a first breaker **BR1.** The first EM1 is connected to a battery pack **BP** via the first EMD1 and first breaker BR1 with e.g. cables. The first hybrid driveline 210 further comprises a first combustion engine **CE1** comprising a first engine management system **EMS1.** An engine management system (EMS) is responsible for controlling and optimizing the operation of the engine to meet performance, efficiency, and emissions requirements. By monitoring engine parameters and making real-time adjustments, it manages various functions and parameters of the engine to optimize performance, fuel efficiency, emissions, and overall operation. The first combustion engine CE1 is coupled to the first electric machine EM1 with shaft. The first hybrid driveline 210 further comprises a first hybrid power control unit **HPCU1.** An HPCU integrates and manages the different power sources in a hybrid system, ensuring optimal performance, efficiency, and reliability. For example, the HPCU optimally manages the energy flow between the internal combustion engine, electric motor and battery pack. It decides when to use the CE, electric motor, or both, to achieve the best fuel efficiency and performance.

The second hybrid driveline 220 comprises a second electric machine **EM2** comprising a second resolver **R2.** The second hybrid driveline 210 further comprises a second electric motor drive **EMD2** and a second breaker **BR2.** The second EM2 is connected to the battery pack BP via the second electric motor drive EMD2 and second breaker BR2 with e.g. cables. The second hybrid driveline 220 further comprises a second combustion engine **CE2** comprising a second engine management system **EMS2.**

The propulsion arrangement 200 further comprises a third and fourth breakers **BR3, BR4** and a third and fourth electric motor drives **EMD3, EMD4.** The first electric machine EM1 is connected to the third electric motor drive EMD3 via the third breaker BR3. The second electric machine EM2 is connected to the fourth electric motor drive EMD4 via the fourth breaker BR4. The third and fourth electric motor drives EMD3, EMD4 are connected to each other such that the first and second hybrid drivelines 210, 220 can be connected to each other at the electric machines EM1, EM2 side, i.e. at the AC side of the drivelines, via the third and fourth breakers BR3, BR4 and the third and fourth electric motor drives EMD3, EMD4.

The first and second hybrid power control units HPCU1, HPCU2 are configured to receive a command from a central control system **CU,** e.g. a bridge vessel control system, of the marine vessel and generate control signals to configure an operation mode of the propulsion arrangement 200.

The operation mode of the propulsion arrangement 200 may comprise a first and a second operation modes. The first operation mode may be a normal operation mode, i.e. each engine and its corresponding driveline operate independently of the other. In each driveline, the power flow is between electric machine and battery pack as shown by arrow **211, 221,** i.e. no power transfer between the two drivelines. The second operation mode may be a cross-function operation mode, i.e. running one engine at a time while the other engine goes to standby, power can be transferred between the two drivelines, as shown by arrow **230.**

The operation mode of the propulsion arrangement 200 may be configured by setting the first, second third and fourth breakers BR1, BR2, BR3, BR4 in closed or open position, and controlling the operations of the third and fourth electric motor drives EMD3, EMD4. The first and second hybrid power control units HPCU1, HPCU2 may be configured to set the third and fourth breakers BR3, BR4 in closed position, and set the first and second breakers BR1, BR2 to open position such that the first and second hybrid drivelines 210, 220 are connected to each other enabling power flow between the first and second hybrid drivelines 210, 220.

For example, the propulsion arrangement 200 may be configured to run the first combustion engine CE1 and keep the second combustion engine CE2 in standby. Then the third electric motor drive EMD3 may be set to generate **negative** torque by e.g. the first hybrid power control unit HPCU1 and the fourth electric motor drive EMD4 is set to generate **positive** torque for the second electric machine EM2 by e.g. the second hybrid power control unit HPCU2. The power from the first combustion engine CE1 is transferred to the second electric machine EM2 via EM1, BR3, EMD3, EMD4, BR4.

The propulsion arrangement 200 may be configured to run the second combustion engine CE2 and keep the first combustion engine CE1 in standby. Then the third electric motor drive EMD3 is set to generate **positive** torque for the first electric machine EM1 by e.g. the first hybrid power control unit HPCU1 and the fourth electric motor drive EMD4 is set to generate **negative** torque by e.g. the second hybrid power control unit HPCU2. The power from the second combustion engine CE2 is transferred to the first electric machine EM1 via EM2, BR4, EMD4, EMD3, BR3.

Note that the first and third breakers BR1, BR3 shall not be closed at the same time. The second and fourth breakers BR2, BR4 shall not be closed at the same time. The resolver for each electric machine shall be connected to both EMDs that the electric machine is connected to. For the first resolver R1, i.e. the Port EM resolver, it shall be connected to the first and third electric motor drives EMD1 and EMD3. For the second resolver R2, i.e. the Starboard EM resolver, it shall be connected to the second and fourth electric motor drives EMD2 and EMD4.

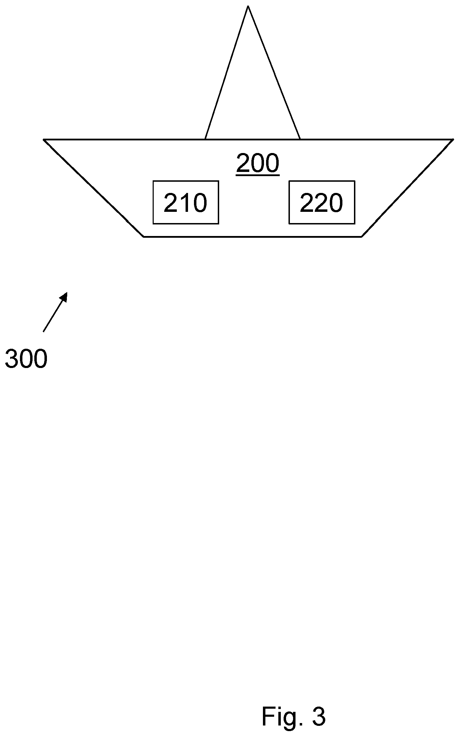

The propulsion arrangement 200 may be implemented in any type of marine vessels, e.g. cargo ships, passenger ships, work and utility vessels etc. **Fig. 3** is schematic block diagram showing a marine vessel **300** comprising a propulsion arrangement 200 which comprise a first hybrid driveline 210, i.e. a Port driveline, and a second hybrid driveline 220, i.e. a Starboard driveline.

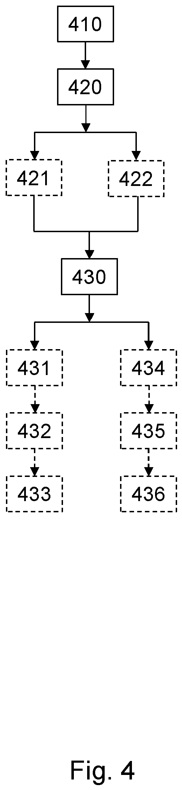

A computer-implemented method for controlling the operation of the propulsion arrangement 200 in a marine vessel 300 will be described with reference to **Fig. 4****.** The method comprises at least one of the following actions, which may be performed in any suitable order.

### Action 410

The propulsion arrangement 200, by e.g. the first and second hybrid power control units HPCU1, HPCU2, receives a command from a central control system CU of the marine vessel 300. The command may be an operation mode configuration command.

### Action 420

The propulsion arrangement 200 generates control signals, by e.g. the first and a second hybrid power control units HPCU1, HPCU2, to control the operation mode of the propulsion arrangement 200 based on the command.

If the command is a cross-over function operation mode, the method may further comprise at least one of the following actions.

### Action 421

The propulsion arrangement 200 may generate control signals to set the first breaker BR1 in an open position and set the third breaker BR3 in closed position by e.g. the first hybrid power control unit HPCU1.

### Action 422

The propulsion arrangement 200 may generate control signals to set the second breaker BR2 to an open position and set the fourth breaker BR4 in closed position by e.g. the second hybrid power control unit HPCU2.

### Action 430

The propulsion arrangement 200 may generate control signals, by e.g. the first and a second hybrid power control units HPCU1, HPCU2, to control the operations of the third and fourth electric motor drives EMD3, EMD4 such that power flow occurs between the first and second hybrid drivelines 210, 220.

If the power flow from the first driveline 210 to the second driveline 220 is desired, the propulsion arrangement 200 may generate control signals to control the operations of the third and fourth electro-mechanical drives EMD3, EMD4 may comprise the following actions.

### Action 431

The propulsion arrangement 200 may generate control signals, by e.g. the first and a second hybrid power control units HPCU1, HPCU2, to run the first combustion engine CE1 and keep the second combustion engine CE2 in standby.

### Action 432

The propulsion arrangement 200 may generate control signals to control the third electric motor drive EMD3 to generate negative torque by e.g. the first hybrid power control unit HPCU1.

### Action 433

The propulsion arrangement 200 may generate control signals to control the fourth electric motor drive EMD4 to generate positive torque for the second electric machine EM2 by e.g. the second hybrid power control unit HPCU2.

Alternatively, if the power flow from the second driveline 220 to the first driveline 210 is desired, the propulsion arrangement 200 may generate control signals to control the operations of the third and fourth electro-mechanical drives EMD3, EMD4 may comprise the following actions.

### Action 434

The propulsion arrangement 200 may generate control signals, by e.g. the first and a second hybrid power control units HPCU1, HPCU2, to run the second combustion engine CE2 and keep the first combustion engine CE1 in standby.

### Action 435

The propulsion arrangement 200 may generate control signals to control the third electric motor drive EMD3 to generate positive torque for the first electric machine EM1 by e.g. the first hybrid power control unit HPCU1.

### Action 436

The propulsion arrangement 200 may generate control signals to control the fourth electric motor drive EMD4 to generate negative torque by e.g. the second hybrid power control unit HPCU2.

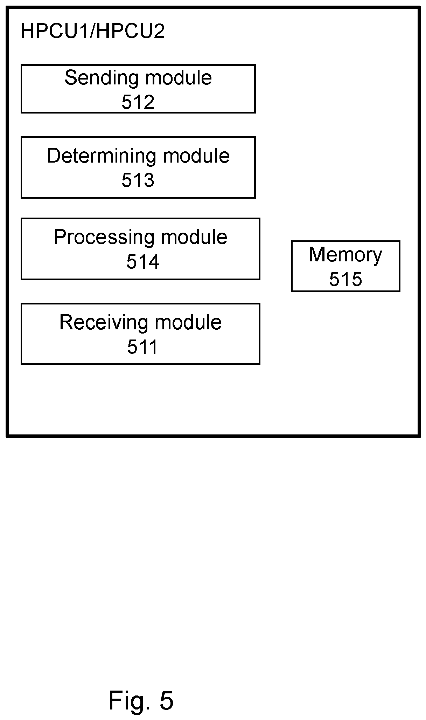

The computer-implemented method for controlling the operation of the propulsion arrangement 200 in a marine vessel 300 may be implemented in the first and second hybrid power control unit HPCU1, HPCU2. The first and second hybrid power control unit HPCU1, HPCU2 may comprise modules or units as shown in **Fig. 5****.** The hybrid power control unit HPCU1, HPCU2 may comprise a **receiving module 511, a sending module 512, a determining module 513, a processing module 514** etc. The hybrid power control unit HPCU1, HPCU2 may comprise other units or modules, e.g. a **memory 515.**

The hybrid power control units HPCU1, HPCU2 are configured to perform any one of the method **Actions 410-436.**

For example, the hybrid power control units HPCU1, HPCU2 are configured to, by means of e.g. the receiving module 511 being configured to, receive a command from a central control system CU of the marine vessel 300. The command may be an operation mode configuration command.

The first and a second hybrid power control units HPCU1, HPCU2 are configured to, by means of e.g. the processing module 514 or the determining module 513 being configured to, generate control signals to control the operation mode of the propulsion arrangement 200 based on the command.

The first and a second hybrid power control units HPCU1, HPCU2 may be integrated with the central control system CU. The central control system CU, the first and a second hybrid power control units HPCU1, HPCU2 may be refereed as a computer system.

To summarize, a propulsion arrangement 300 with two drivelines 210, 220 for a marine vessel 300 and the method for controlling the operation of the propulsion arrangement 300 are provided. The two drivelines 210, 220 can be connected at the AC side of the drive lines by just adding two extra electric motor drives EMD3, EMD4 and two extra breakers BR3, BR4 such that the cross-over functionality between the two drivelines is provided which enables a power flow between the two drivelines to save fuel and engine hours. The propulsion arrangement 300 is a simple system with lower cost, smaller size, and higher efficiency compared to the prior art solution.

The first and second hybrid power control unit HPCU1, HPCU2 and the central control unit CU may be integrated as one control unit or connected or otherwise communicatively coupled to each other and may be referred to as a computer system. The computer-implemented method for controlling the operation of the propulsion arrangement 200 in a marine vessel 300 may be implemented in the computer system comprised in the marine vessel 300. The computer system is configured to, by e.g. a processing circuitry being configured to, perform any one of the method **Actions 410-436.**

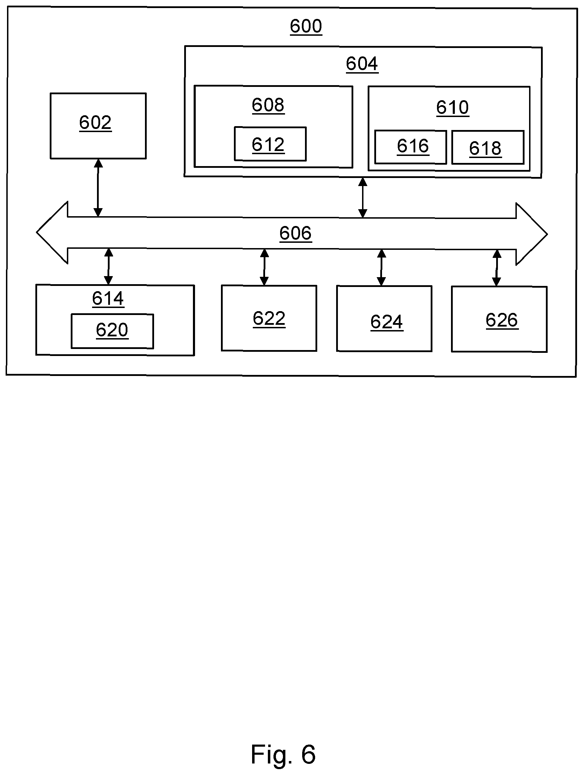

**Fig. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Some examples are listed in the following:**
Example 1: A propulsion arrangement (200) for a marine vessel comprising:
   a first hybrid driveline (210) and a second hybrid driveline (220), wherein each hybrid driveline comprises:
      an electric machine (EM1, EM2),
      a combustion engine (CE1, CE2) comprising an engine management system (EMS1, EMS2), the combustion engine (CE1, CE2) is coupled to the electric machine (EM1, EM2), and
      a hybrid power control unit (HPCU1, HPCU2); and wherein
      a first electric machine (EM1) is connected to a battery pack (BP) via a first breaker (BR1) and a first electric motor drive (EMD1), a second electric machine (EM2) is connected to the battery pack (BP) via a second breaker (BR2) and a second electric motor drive (EMD2),
   the propulsion arrangement (200) further comprises:
      a third and fourth breakers (BR3, BR4) and a third and fourth electric motor drives (EMD3, EMD4); and wherein
      the first electric machine (EM1) is connected to the third electric motor drive (EMD3) via the third breaker (BR3),
      the second electric machine (EM2) is connected to the fourth electric motor drive (EMD4) via the fourth breaker (BR4), and
      the third and fourth electric motor drives (EMD3, EMD4) are connected to each other such that the first and second hybrid drivelines (210, 220) are connected to each other at the electric machines (EM1, EM2) side via the third and fourth breakers (BR3, BR4) and the third and fourth electric motor drives (EMD3, EMD4), and wherein,
      the first and second hybrid power control unit (HPCU1, HPCU2) are configured to receive a command from a central control system (CU) of the marine vessel and generate control signals to configure an operation mode of the propulsion arrangement (200).
Example 2: The propulsion arrangement (200) according to Example 1, wherein the operation mode of the propulsion arrangement (200) is configured by setting the first, second third and fourth breakers (BR1, BR2, BR3, BR4) in closed or open position, and controlling the operations of the third and fourth electric motor drives (EMD3, EMD4).
Example 3: The propulsion arrangement (200) according to any one of Examples 1-2, wherein the first and second hybrid power control unit (HPCU1, HPCU2) are configured to set the third and fourth breakers (BR3, BR4) in closed position, and set the first and second breakers to open position such that the first and second hybrid drivelines (210, 220) are connected to each other enabling power flow between the first and second hybrid drivelines (210, 220).
Example 4: The propulsion arrangement (200) according to Example 3, wherein the propulsion arrangement (200) is configured to run the first combustion engine (CE1) and keep the second combustion engine (CE2) in standby, and wherein the third electric motor drive (EMD3) is set to generate negative torque by the first hybrid power control unit (HPCU1) and the fourth electric motor drive (EMD4) is set to generate positive torque for the second electric machine (EM2) by the second hybrid power control unit (HPCU2).
Example 5: The propulsion arrangement (200) according to Example 3, wherein the propulsion arrangement (200) is configured to run the second combustion engine (CE2) and keep the first combustion engine (CE1) in standby, and wherein the third electric motor drive (EMD3) is set to generate positive torque for the first electric machine (EM1) by the first hybrid power control unit (HPCU1) and the fourth electric motor drive (EMD4) is set to generate negative torque by the second hybrid power control unit (HPCU2).
Example 6: A computer-implemented method for controlling operation of the propulsion arrangement (200) in a marine vessel, wherein the propulsion arrangement (200) comprises a first and a second hybrid drivelines (210, 220) comprising a first and second electric machines (EM1, EM2), a first and a second combustion engines (CE1, CE2), a first and a second hybrid power control units (HPCU1, HPCU2), wherein the first and second electric machines (EM1, EM2) are connected to a battery pack via a first and second breakers (BR1, BR2) respectively, and the first and a second hybrid drivelines (210, 220) are connected at the side of the first and second electric machines (EM1, EM2) via a third and a fourth breakers (BR3, BR4) and a third and a fourth electric motor drives (EMD3, EMD4), the method comprising:
   receiving (410) by e.g. the first and a second hybrid power control units (HPCU1, HPCU2) a command from a central control system (CU) of the marine vessel, wherein the command is an operation mode configuration command; and
   generating (420) control signals by e.g. the first and a second hybrid power control units (HPCU1, HPCU2) to control the operation mode of the propulsion arrangement (200) based on the command.
Example 7: The method according to Example 6, wherein the command is a cross-over function operation mode, and wherein generating control signals (420) by the first and a second hybrid power control units (HPCU1, HPCU2) comprises:
   generating (421) control signals to set the first breaker (BR1) in open position and set the third breaker (BR3) in closed position by e.g. the first hybrid power control unit (HPCU1);
   generating (422) control signals to set the second breaker (BR2) to open position and set the fourth breaker (BR4) in closed position by e.g. the second hybrid power control unit (HPCU2); and
   generating (430) control signals to control the operations of the third and fourth electric motor drives (EMD3, EMD4) such that power flow occurs between the first and second hybrid drivelines (210, 220).
Example 8: The method according to Example 7, wherein generating (430) control signals to control the operations of the third and fourth electro-mechanical drives (EMD3, EMD4) comprises:
   running (431) the first combustion engine (CE1) and keeping the second combustion engine (CE2) in standby;
   controlling (432) the third electric motor drive (EMD3) to generate negative torque by e.g. the first hybrid power control unit (HPCU1); and
   controlling (433) the fourth electric motor drive (EMD4) to generate positive torque for the second electric machine (EM2) by e.g. the second hybrid power control unit (HPCU2).
Example 9: The method according to Example 7, wherein generating (430) control signals to control the operations of the third and fourth electro-mechanical drives (EMD3, EMD4) comprises:
   running (434) the second combustion engine (CE2) and keeping the first combustion engine (CE1) in standby;
   controlling (435) the (EMD3) to generate positive torque for the first electric machine (EM1) by e.g. the first hybrid power control unit (HPCU1);
   controlling (436) the fourth electric motor drive (EMD4) to generate negative torque by e.g. the second hybrid power control unit (HPCU2).
Example 10: A marine vessel (300) comprising a propulsion arrangement (200) according to any one of Examples 1-5, wherein the first hybrid driveline (210) is a Port driveline, and the second hybrid driveline (220) is a Starboard driveline.
Example 11: A computer system (600) comprising processing circuitry (602) configured to perform the method according to any one of Examples 6-9.
Example 12: A marine vessel (300) comprising a computer system (600) according to Example 11.
Example 13: A computer program product (614) comprising program code (620) for performing, when executed by the processing circuitry (602), the method of any one of Examples 6-9.
Example 14: A non-transitory computer-readable storage medium (614) comprising instructions, which when executed by the processing circuitry (602), cause the processing circuitry (602) to perform the method of any one of Examples 6-9.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A propulsion arrangement (200) for a marine vessel (300) comprising:
a first hybrid driveline (210) and a second hybrid driveline (220), wherein each hybrid driveline comprises:
an electric machine (EM1, EM2),
a combustion engine (CE1, CE2) comprising an engine management system (EMS1, EMS2), the combustion engine (CE1, CE2) is coupled to the electric machine (EM1, EM2), and
a hybrid power control unit (HPCU1, HPCU2); and wherein
a first electric machine (EM1) is connected to a battery pack (BP) via a first breaker (BR1) and a first electric motor drive (EMD1), a second electric machine (EM2) is connected to the battery pack (BP) via a second breaker (BR2) and a second electric motor drive (EMD2);
the propulsion arrangement (200) further comprises:
a third and fourth breakers (BR3, BR4) and a third and fourth electric motor drives (EMD3, EMD4); and wherein
the first electric machine (EM1) is connected to the third electric motor drive (EMD3) via the third breaker (BR3),
the second electric machine (EM2) is connected to the fourth electric motor drive (EMD4) via the fourth breaker (BR4), and
the third and fourth electric motor drives (EMD3, EMD4) are connected to each other such that the first and second hybrid drivelines (210, 220) are connected to each other at the electric machines (EM1, EM2) side via the third and fourth breakers (BR3, BR4) and the third and fourth electric motor drives (EMD3, EMD4); and wherein,
the first and second hybrid power control unit (HPCU1, HPCU2) are configured to receive a command from a central control system (CU) of the marine vessel and generate control signals to configure an operation mode of the propulsion arrangement (200).

2. The propulsion arrangement (200) according to claim 1, wherein the operation mode of the propulsion arrangement (200) is configured by setting the first, second third and fourth breakers (BR1, BR2, BR3, BR4) in closed or open position, and controlling the operations of the third and fourth electric motor drives (EMD3, EMD4).

3. The propulsion arrangement (200) according to any one of claims 1-2, wherein the first and second hybrid power control unit (HPCU1, HPCU2) are configured to set the third and fourth breakers (BR3, BR4) in closed position, and set the first and second breakers to open position such that the first and second hybrid drivelines (210, 220) are connected to each other enabling power flow between the first and second hybrid drivelines (210, 220).

4. The propulsion arrangement (200) according to claim 3, wherein the propulsion arrangement (200) is configured to run the first combustion engine (CE1) and keep the second combustion engine (CE2) in standby, and wherein the third electric motor drive (EMD3) is set to generate negative torque by the first hybrid power control unit (HPCU1) and the fourth electric motor drive (EMD4) is set to generate positive torque for the second electric machine (EM2) by the second hybrid power control unit (HPCU2).

5. The propulsion arrangement (200) according to claim 3, wherein the propulsion arrangement (200) is configured to run the second combustion engine (CE2) and keep the first combustion engine (CE1) in standby, and wherein the third electric motor drive (EMD3) is set to generate positive torque for the first electric machine (EM1) by the first hybrid power control unit (HPCU1) and the fourth electric motor drive (EMD4) is set to generate negative torque by the second hybrid power control unit (HPCU2).

6. A computer-implemented method for controlling operation of the propulsion arrangement (200) in a marine vessel, wherein the propulsion arrangement (200) comprises a first and a second hybrid drivelines (210, 220) comprising a first and second electric machines (EM1, EM2), a first and a second combustion engines (CE1, CE2), a first and a second hybrid power control units (HPCU1, HPCU2), wherein the first and second electric machines (EM1, EM2) are connected to a battery pack via a first and second breakers (BR1, BR2) respectively, and the first and a second hybrid drivelines (210, 220) are connected at the side of the first and second electric machines (EM1, EM2) via a third and a fourth breakers (BR3, BR4) and a third and a fourth electric motor drives (EMD3, EMD4), the method comprising:
receiving (410) a command from a central control system (CU) of the marine vessel, wherein the command is an operation mode configuration command; and
generating (420) control signals to control the operation mode of the propulsion arrangement (200) based on the command.

7. The method according to claim 6, wherein the command is a cross-over function operation mode, and wherein generating control signals (420) comprises:
generating (421) control signals to set the first breaker (BR1) in open position and set the third breaker (BR3) in closed position;
generating (422) control signals to set the second breaker (BR2) to open position and set the fourth breaker (BR4) in closed position; and
generating (430) control signals to control the operations of the third and fourth electric motor drives (EMD3, EMD4) such that power flow occurs between the first and second hybrid drivelines (210, 220).

8. The method according to claim 7, wherein generating (430) control signals to control the operations of the third and fourth electro-mechanical drives (EMD3, EMD4) comprises:
running (431) the first combustion engine (CE1) and keeping the second combustion engine (CE2) in standby;
controlling (432) the third electric motor drive (EMD3) to generate negative torque; and
controlling (433) the fourth electric motor drive (EMD4) to generate positive torque for the second electric machine (EM2).

9. The method according to claim 7, wherein generating (430) control signals to control the operations of the third and fourth electro-mechanical drives (EMD3, EMD4) comprises:
running (434) the second combustion engine (CE2) and keeping the first combustion engine (CE1) in standby;
controlling (435) the (EMD3) to generate positive torque for the first electric machine (EM1);
controlling (436) the fourth electric motor drive (EMD4) to generate negative torque.

10. A marine vessel (300) comprising a propulsion arrangement (200) according to any one of claims 1-5, wherein the first hybrid driveline (210) is a Port driveline, and the second hybrid driveline (220) is a Starboard driveline.

11. A computer system (600) comprising processing circuitry (602) configured to perform the method according to any one of claims 6-9.

12. A marine vessel (300) comprising a computer system (600) according to claim 11.

13. A computer program product (614) comprising program code (620) for performing, when executed by the processing circuitry (602), the method of any one of claims 6-9.

14. A non-transitory computer-readable storage medium (614) comprising instructions, which when executed by the processing circuitry (602), cause the processing circuitry (602) to perform the method of any one of claims 6-9.

## Amended claims

### Amended claims in accordance with Rule 137(2) EPC.

1. A propulsion arrangement (200) for a marine vessel (300) comprising:
a first hybrid driveline (210) and a second hybrid driveline (220), wherein each hybrid driveline comprises:
an electric motor (EM1, EM2),
a combustion engine (CE1, CE2) comprising an engine management system (EMS1, EMS2), the combustion engine (CE1, CE2) is coupled to the electric motor (EM1, EM2), and
a hybrid power control unit (HPCU1, HPCU2); and wherein
a first electric motor (EM1) comprised in the first hybrid driveline (210) is connected to a battery pack (BP) via a first breaker (BR1) and a first electric motor drive (EMD1) comprised in the first hybrid driveline (210), a second electric motor (EM2) comprised in the second hybrid driveline (220) is connected to the battery pack (BP) via a second breaker (BR2) and a second
electric motor drive (EMD2) comprised in the second hybrid driveline (220);
the propulsion arrangement (200) further comprises:
a third and fourth breakers (BR3, BR4) and a third and fourth electric motor drives (EMD3, EMD4); and wherein
the first electric motor (EM1) is connected to the third electric motor drive (EMD3) via the third breaker (BR3),
the second electric motor (EM2) is connected to the fourth electric motor drive (EMD4) via the fourth breaker (BR4), and
the third and fourth electric motor drives (EMD3, EMD4) are connected to each other such that the first and second hybrid drivelines (210, 220) are connected to each other at the electric motors (EM1, EM2) side via the third and fourth breakers (BR3, BR4) and the third and fourth electric motor drives (EMD3, EMD4); and wherein,
the first and second hybrid power control unit (HPCU1, HPCU2) are configured to receive a command from a central control system (CU) of the marine vessel and generate control signals to configure an operation mode of the propulsion arrangement (200).

2. The propulsion arrangement (200) according to claim 1, wherein the operation mode of the propulsion arrangement (200) is configured by setting the first, second third and fourth breakers (BR1, BR2, BR3, BR4) in closed or open position, and controlling the operations of the third and fourth electric motor drives (EMD3, EMD4).

3. The propulsion arrangement (200) according to any one of claims 1-2, wherein the first and second hybrid power control unit (HPCU1, HPCU2) are configured to set the third and fourth breakers (BR3, BR4) in closed position, and set the first and second breakers to open position such that the first and second hybrid drivelines (210, 220) are connected to each other enabling power flow between the first and second hybrid drivelines (210, 220).

4. The propulsion arrangement (200) according to claim 3, wherein the propulsion arrangement (200) is configured to run the first combustion engine (CE1) and keep the second combustion engine (CE2) in standby, and wherein the third electric motor drive (EMD3) is set to generate negative torque by the first hybrid power control unit (HPCU1) for operating the first electric motor (EM1) in generating mode and the fourth electric motor drive (EMD4) is set to generate positive torque for operating the second electric motor (EM2) in motoring mode by the second hybrid power control unit (HPCU2) .

5. The propulsion arrangement (200) according to claim 3, wherein the propulsion arrangement (200) is configured to run the second combustion engine (CE2) and keep the first combustion engine (CE1) in standby, and wherein the third electric motor drive (EMD3) is set to generate positive torque for operating the first electric motor (EM1) in motoring mode by the first hybrid power control unit (HPCU1) and the fourth electric motor drive (EMD4) is set to generate negative torque for operating the second electric motor (EM2) in generating mode by the second hybrid power control unit (HPCU2).

6. A computer-implemented method for controlling operation of the propulsion arrangement (200) in a marine vessel, wherein the propulsion arrangement (200) comprises a first and a second hybrid drivelines (210, 220) comprising a first and second electric motors (EM1, EM2), a first and a second combustion engines (CE1, CE2), a first and a second hybrid power control units (HPCU1, HPCU2), wherein the first and second electric motors (EM1, EM2) are connected to a battery pack via a first and second breakers (BR1, BR2) respectively, and the first and a second hybrid drivelines (210, 220) are connected at the side of the first and second electric motors (EM1, EM2) via a third and a fourth breakers (BR3, BR4) and a third and a fourth electric motor drives (EMD3, EMD4), the method comprising:
receiving (410) a command from a central control system (CU) of the marine vessel, wherein the command is an operation mode configuration command; and
generating (420) control signals to control the operation mode of the propulsion arrangement (200) based on the command.

7. The method according to claim 6, wherein the command is a cross-over function operation mode, and wherein generating control signals (420) comprises:
generating (421) control signals to set the first breaker (BR1) in open position and set the third breaker (BR3) in closed position;
generating (422) control signals to set the second breaker (BR2) to open position and set the fourth breaker (BR4) in closed position; and
generating (430) control signals to control the operations of the third and fourth electric motor drives (EMD3, EMD4) such that power flow occurs between the first and second hybrid drivelines (210, 220).

8. The method according to claim 7, wherein generating (430) control signals to control the operations of the third and fourth electro-mechanical drives (EMD3, EMD4) comprises:
running (431) the first combustion engine (CE1) and keeping the second combustion engine (CE2) in standby;
controlling (432) the third electric motor drive (EMD3) to generate negative torque; and
controlling (433) the fourth electric motor drive (EMD4) to generate positive torque for the second electric motor (EM2).

9. The method according to claim 7, wherein generating (430) control signals to control the operations of the third and fourth electro-mechanical drives (EMD3, EMD4) comprises:
running (434) the second combustion engine (CE2) and keeping the first combustion engine (CE1) in standby;
controlling (435) the (EMD3) to generate positive torque for the first electric motor (EM1);
controlling (436) the fourth electric motor drive (EMD4) to generate negative torque.

10. A marine vessel (300) comprising a propulsion arrangement (200) according to any one of claims 1-5, wherein the first hybrid driveline (210) is a Port driveline, and the second hybrid driveline (220) is a Starboard driveline.

11. A computer system (600) comprising processing circuitry (602) configured to perform the method according to any one of claims 6-9.

12. A marine vessel (300) comprising a computer system (600) according to claim 11.

13. A computer program product (614) comprising program code (620) for performing, when executed by the processing circuitry (602), the method of any one of claims 6-9.

14. A non-transitory computer-readable storage medium (614) comprising instructions, which when executed by the processing circuitry (602), cause the processing circuitry (602) to perform the method of any one of claims 6-9.
